# EUROPÄISCHE PATENTSCHRIFT

(11) **EP 3 006 905 B1**
(45) Veröffentlichungstag und Bekanntmachung des Hinweises auf die Patenterteilung: **17.04.2019**
(21) Anmeldenummer: 15187600.0
(22) Anmeldetag: 30.09.2015
(51) Int. Cl.: G01F 23/284

(54) **VERFAHREN SOWIE VORRICHTUNG ZUR FÜLLSTANDSMESSUNG**
METHOD AND DEVICE FOR MEASURING A FILL LEVEL
PROCEDE ET DISPOSITIF DE MESURE D'UN NIVEAU DE REMPLISSAGE

(30) Priorität: 10.10.2014 DE 102014114752
(43) Veröffentlichungstag der Anmeldung: 13.04.2016
(73) Patentinhaber: Krohne S.A.S., 26103 Romans-sur-Isere Cedex (FR)
(72) Erfinder: Gerding, Michael, 44805 Bochum (DE); Pichot, Vincent, 26100 Romans-sur-Isere (FR)
(74) Vertreter: Gesthuysen Patent- und Rechtsanwälte

(56) Entgegenhaltungen:
- WO-A2-02/063249
- US-A- 4 695 787
- US-A- 5 376 888
- US-A1- 2010 127 848
- HOOK W R ET AL: "Remote diode shorting improves measurement of soil water by time domain reflectometry", SOIL SCIENCE SOCIETY OF AMERICA. JOU, SOIL SCIENCE SOCIETY OF AMERICA, US, vol. 56, no. 5, 1 January 1992 (1992-01-01), pages 1384-1391, XP009157434, ISSN: 0361-5995, DOI: 10.2136/SSSAJ1992.03615995005600050009X

## Beschreibung

Die Erfindung betrifft ein Verfahren zur Füllstandsmessung nach dem Laufzeitverfahren, wobei mindestens eine Leitereinheit mit pulsartigen elektromagnetischen Sendesignalen beaufschlagt wird, wobei von der Leitereinheit elektromagnetische Antwortsignale abgegriffen werden, wobei die Leitereinheit entweder mit Signalen mit positiver Polarität oder mit Signalen negativer Polarität beaufschlagt wird und wobei die Sendesignale mit einer vorgebbaren Abfolge in Bezug auf die Polarität erzeugt werden.

Weiterhin betrifft die Erfindung eine Vorrichtung zur Füllstandsmessung nach dem Laufzeitverfahren mit mindestens einer Leitereinheit, mit mindestens einer Elektronikvorrichtung zum Beaufschlagen der Leitereinheit mit pulsartigen elektromagnetischen Sendesignalen und zum Abgreifen von elektromagnetischen Antwortsignalen von der Leitereinheit und mit mindestens einer Auswertevorrichtung zum Auswerten der Antwortsignale. Dabei beaufschlagt die Elektronikvorrichtung die Leitereinheit entweder mit Sendesignalen mit positiver Polarität oder mit Sendesignalen mit negativer Polarität, wobei die Sendesignale mit einer vorgebbaren Abfolge in Bezug auf die Polarität erzeugt werden.

Ein derartiges Verfahren und eine derartige Vorrichtung zur Füllstandsmessung sind aus der US 5,376,888 A bekannt.

Bei einem Füllstandsmessgerät, das nach dem Laufzeit-Verfahren arbeitet, wird das sogenannte TDR-Messprinzip (Time Domain Reflectometry) angewendet, indem die Laufzeit von entlang einer Leitereinheit geführten elektromagnetischen Signalen ausgewertet wird. Die Leitereinheit besteht beispielsweise aus einem elektrisch leitfähigen Seil, aus einer Koaxialleitung, aus zwei benachbarten Leitern oder aus mindestens einem leitfähigen Stab. Die Sendesignale werden dabei entlang der Leitereinheit in Richtung der Oberfläche des Mediums, dessen Füllstand ermittelt werden soll, ausgesandt. Treffen die Signale auf die Oberfläche des Mediums, so werden sie dort teilweise reflektiert. Aus der Zeit zwischen dem Aussenden und dem Empfang der reflektierten Antwortsignale lässt sich der Füllstand des Mediums ermitteln. Der große Vorteil des Führens der Mikrowellensignale besteht darin, dass sich ändernde Umgebungsbedingungen (z. B. steigender oder ein fallender Umgebungsdruck, steigende oder fallende Temperatur) die Messgenauigkeit nicht beeinträchtigen und dass zudem die Laufzeit des Signals im Wesentlichen unabhängig von der Dielektrizitätszahl des Mediums ist.

Die Sendesignale sind dabei oft einzelne Pulse (siehe z. B. US 2002/0026828 A1 oder US 7,477,059 B2), die in Abhängigkeit vom Vorzeichen der Amplitude des Pulses über eine positive oder negative Polarität verfügen (siehe z. B die US 2008/0309547 A1).

Um die Auswertung der Antwortsignale zu verbessern, ist es beispielsweise in der US 7,525,476 B1 oder der US 2014/0104099 A1 offenbart, mechanische Referenzreflektoren entlang der Leitereinheit vorzusehen.

Der Erfindung liegt daher die Aufgabe zugrunde, ein Verfahren sowie eine Vorrichtung zur Füllstandsbestimmung vorzuschlagen, die gegenüber dem Stand der Technik verbessert sind.

Das erfindungsgemäße Verfahren, bei dem die zuvor hergeleitete und aufgezeigte Aufgabe gelöst ist, ist zunächst und im Wesentlichen dadurch gekennzeichnet, dass die Leitereinheit mit mindestens einem ersten Sendesignal mit positiver Polarität oder negativer Polarität beaufschlagt wird. Daraufhin wird mindestens ein erstes Antwortsignal von der Leitereinheit abgegriffen und abgespeichert. Anschließend wird die Leitereinheit mit mindestens einem zweiten Sendesignal mit negativer Polarität oder positiver Polarität beaufschlagt - das zweite Sendesignal hat also die umgekehrte Polarität wie das erste Sendesignal. Daraufhin wird mindestens ein zweites Antwortsignal von der Leitereinheit abgegriffen. Dann werden mindestens das erste Antwortsignal und das zweite Antwortsignal gemeinsam ausgewertet.

In einer Ausgestaltung werden die zwei Antwortsignale voneinander subtrahiert. Hierdurch wird die Dynamik erhöht.

In einer alternativen Ausgestaltung werden die zwei Antwortsignale bei der Auswertung miteinander verglichen, um beispielsweise die gesamte Messstrecke zu überprüfen. Dies geschieht vorzugsweise unter der Annahme, dass sich die Messbedingungen - z. B. durch die kurze Zeit zwischen den Sendesignalen - nicht wesentlich verändert haben. Unter dieser Bedingung müsste - im Ideal- bzw. Normalfall - die Änderung der Polarität der Sendesignale zu einer Änderung der Polarität der Antwortsignale führen. Abweichungen davon wären als Anzeichen für das Vorliegen eines Fehlers zu werten.

In einer weiteren Ausgestaltung wird die Leitereinheit mit mindestens einem Sendesignal beaufschlagt. Dabei wird von einer entlang der Leitereinheit befindlichen Referenzvorrichtung in Reaktion auf das Sendesignal mindestens ein Referenzsignal in dem Fall erzeugt, dass das Sendesignal eine der Referenzvorrichtung zugeordnete Polarität aufweist. Hat das Sendesignal eine andere Polarität, so wird kein Referenzsignal erzeugt. Die Referenzvorrichtung ermöglicht daher Referenzsignale, die bedingt durch die Art des Sendesignals auftreten können, aber nicht bei jeder Messung vorhanden sein müssen. Es ergibt sich also ein einschaltbares oder wegschaltbares Referenzsignal.

Die Referenzvorrichtung hat den Vorteil, dass sich Referenzsignale aus einem Teil der Messstrecke gewinnen lassen, der als aktiv bezeichnet werden kann, indem dieser Teil auch vom Medium bedeckt und indem für diesen Bereich auch ein Füllstand ermittelt werden kann. Im Stand der Technik sind Referenzvorrichtungen im Regelfall nur in solchen Bereichen vorgesehen, für die keine Füllstandsmessung normalerweise üblich bzw. möglich ist.

In einer Ausgestaltung ist zudem vorgesehen, dass von der Referenzvorrichtung das Referenzsignal so erzeugt wird, dass das Referenzsignal von mindestens einer weiteren Prozessgröße abhängig ist. In einer Ausgestaltung ist die weitere Prozessgröße - als Ergänzung zu dem durch das erfindungsgemäße Verfahren zu bestimmenden Füllstand - die Temperatur. Alternativ handelt es sich um den Druck. Die Temperatur lässt sich beispielsweise ermitteln durch die Verwendung eines temperaturabhängigen Widerstandselements.

In der folgenden Ausgestaltung dient die Polarität der Sendesignale der Überwachung der für die Messung verwendeten Komponenten.

So ist vorgesehen, dass die Leitereinheit von einer Elektronikvorrichtung mit den Sendesignalen beaufschlagt wird. Von der Elektronikvorrichtung werden ebenfalls die Antwortsignale abgegriffen. Die Elektronikvorrichtung verfügt dabei über mindestens eine erste und eine zweite Komponente. Für die Überwachung wird mindestens ein Signal zwischen der ersten und der zweiten Komponente hinsichtlich der Polarität eines Sendesignals ausgewertet. In dieser Ausgestaltung wird also die Polarität als Indikator verwendet, um einzelne Komponenten bzw. die Kommunikation zwischen einzelnen Komponenten der Elektronikvorrichtung zu testen. Ändert sich beispielweise die Polarität oder tritt nicht die vorgegebene Polarität auf, so liegt offensichtlich ein Fehler vor.

Gemäß einer weiteren Lehre bezieht sich die Erfindung auf eine Vorrichtung zur Füllstandsbestimmung, die zumindest dadurch gekennzeichnet ist, dass die Sendesignale jeweils mindestens einen Peak aufweisen und zu jedem Sendesignal das Vorzeichen des Peaks gewählt werden kann, sodass die Signale positive oder negative Amplitude aufweisen, dass die Auswertevorrichtung in einer Speichereinheit mindestens ein nach einer Beaufschlagung der Leitereinheit mit einem Sendesignal positiver Polarität oder negativer Polarität von der Leitereinheit abgegriffenes erstes Antwortsignal abspeichert. Weiterhin wertet die Auswertevorrichtung mindestens ein nach einer Beaufschlagung der Leitereinheit mit einem Sendesignal negativer Polarität oder positiver Polarität von der Leitereinheit abgegriffenes zweites Antwortsignal mit dem abgespeicherten ersten Antwortsignal aus. Beide Sendesignale, die sich hinsichtlich ihrer Polarität voneinander unterscheiden, werden vorzugsweise so zeitig hintereinander gesendet, sodass sich der zu messende Füllstand in der Zwischenzeit nicht wesentlich ändern kann.

Die obigen Ausführungen bezüglich des Verfahrens gelten entsprechend für die Vorrichtung und umgekehrt.

In einer Ausgestaltung werden das erste Antwortsignal und das zweite Antwortsignal voneinander subtrahiert.

In einer Ausgestaltung ist entlang der Leitereinheit mindestens eine Referenzvorrichtung angeordnet. Der Referenzvorrichtung ist dabei genau eine Polarität der Sendesignale zugeordnet - also positive oder negative Polarität. Weiterhin ist die Referenzvorrichtung derartig ausgestaltet, dass sie ein Referenzsignal erzeugt, dass sie aber nur dann ein Referenzsignal erzeugt, wenn ein sich entlang der Leitereinheit ausbreitendes elektromagnetisches Signal die zugeordnete Polarität aufweist. Ist also der Referenzvorrichtung eine positive Polarität zugeordnet, so erzeugt sie nur dann ein Referenzsignal, wenn das Sendesignal positive Polarität aufweist. Mit anderen Worten: Die Referenzvorrichtung funktioniert nur bei einer bestimmten Polarität und erzeugt nur bei der bestimmten Polarität ein Referenzsignal.

In einer Ausgestaltung ist vorgesehen, dass die Referenzvorrichtung mindestens eine Diode aufweist. Alternativ oder ergänzend ist ein temperaturabhängiges Widerstandselement vorgesehen, das die Messung der Temperatur in der Nähe der Referenzvorrichtung erlaubt. In dieser Ausgestaltung könnte die Referenzvorrichtung auch als Temperaturmessstelle bezeichnet werden.

In einer Ausgestaltung verfügt die Elektronikvorrichtung über mindestens eine erste Komponente und eine zweite Komponente. Dabei wird mindestens ein Signal zwischen der ersten und der zweiten Komponente der Auswertevorrichtung zugeführt. Dies geschieht beispielsweise durch eine Signalleitung. Die Auswertevorrichtung wertet dann das Signal hinsichtlich der Polarität aus.

In einer Ausgestaltung sind in der Elektronikvorrichtung zwei ASIC (von application-specific integrated circuit, d. h. anwendungsspezifische integrierte Schaltung) vorgesehen, wobei jeder ASIC Sendesignale mit einer anderen Polarität erzeugt. In einer alternativen Ausgestaltung ist in der Elektronikvorrichtung nur ein ASIC vorgesehen, der die Sendesignale mit beiden Polaritäten erzeugt und der für die jeweilige Polarität der erzeugten Sendesignale umschaltbar ist.

Im Einzelnen gibt es eine Vielzahl von Möglichkeiten, das erfindungsgemäße Verfahren und die erfindungsgemäße Vorrichtung auszugestalten und weiterzubilden. Dazu wird verwiesen einerseits auf die den Patentansprüchen 1 und 6 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung einer Anordnung zur Messung des Füllstands,
- Fig. 2: vier schematisch dargestellte Signale während einer Füllstandsmessung,
- Fig. 3: eine rein schematische Darstellung von Elementen einer Referenzvorrichtung und
- Fig. 4: eine schematische Darstellung eines Teils einer Vorrichtung zur Füllstandsbestimmung.

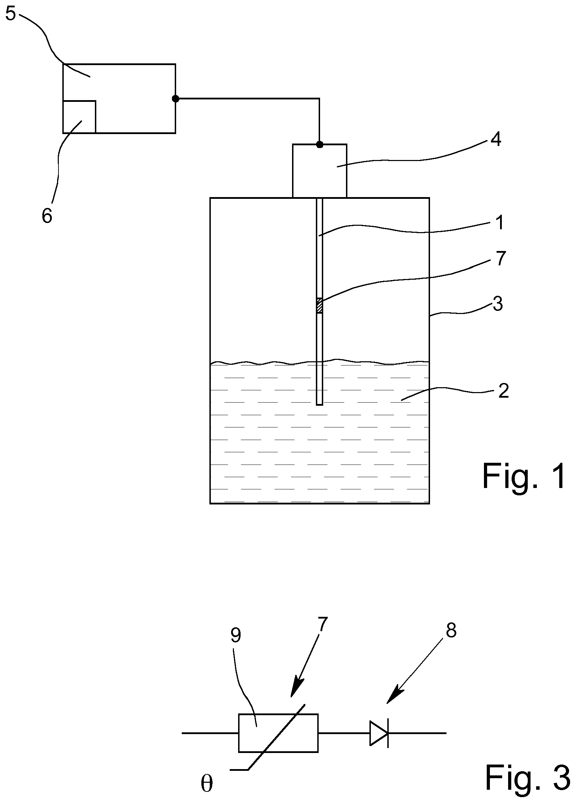

In der Fig. 1 dient ein Seil - im Stand der Technik sind auch Stäbe bekannt - als Leitereinheit 1 für die Messung des Füllstands des Mediums 2 in dem Behälter 3.

Für die Messung wird die Leitereinheit 1 von der Elektronikvorrichtung 4 mit pulsartigen elektromagnetischen Sendesignalen beaufschlagt. Die Sendesignale breiten sich in Richtung auf das Medium 2 aus und werden an der Oberfläche des Mediums 2 reflektiert und laufen als Echosignale zurück zur Elektronikvorrichtung 4. Dort werden elektromagnetische Signale als Antwortsignale abgegriffen und von einer Auswertevorrichtung 5 ausgewertet. Aus der Zeit zwischen dem Aussenden der Sendesignale und dem Empfangen der Antwortsignale kann der Abstand zwischen der Oberfläche des Mediums 2 und der Elektronikvorrichtung 4 ermittelt werden. In einer alternativen, nicht dargestellten Ausgestaltung fallen die Elektronikvorrichtung 4 und die Auswertevorrichtung 5 in einer Einheit zusammen.

Die Besonderheit liegt hier darin, dass die Sendesignale positive oder negative Polarität aufweisen. Das bedeutet, dass die Sendesignale jeweils mindestens einen Peak aufweisen und dass zu jedem Sendesignal das Vorzeichen des Peaks gewählt werden kann, so dass die Signale positive oder negative Amplitude aufweisen.

Die Auswertevorrichtung 5 verfügt über eine Speichereinheit 6, um darin u. a. Antwortsignale abzuspeichern. Dies erlaubt es beispielsweise, Antwortsignale, die zu einer Messung des Füllstands gehören, direkt miteinander zu verarbeiten. Dadurch lässt sich eine Verbesserung der Dynamik erzielen, indem Antwortsignale, die auf Sendesignale mit unterschiedlicher Polarität zurückgehen, voneinander subtrahiert werden.

Daher wird beispielweise ein erstes Sendesignal mit einer Polarität - also positiv oder negativ - erzeugt und damit die Leitereinheit 1 beaufschlagt. Daraufhin wird ein erstes Antwortsignal abgegriffen und in der Speichereinheit 6 abgespeichert. Dann wird ein zweites Sendesignal mit der umgekehrten Polarität - also negativ bzw. positiv - erzeugt und damit die Leitereinheit 1 beaufschlagt. Das daraufhin von der Leitereinheit 1 abgegriffene zweite Antwortsignal wird mit dem ersten Antwortsignal verarbeitet, indem beide Antwortsignale voneinander subtrahiert werden.

Weiterhin ist entlang der Leitereinheit 1 eine Referenzvorrichtung 7 vorgesehen. Die Referenzvorrichtung 7 ist derartig ausgestaltetet, dass ihr eine Polarität zugewiesen ist. Die Zuweisung bezieht sich darauf, dass die Referenzvorrichtung 7 in dem Fall und nur in dem Fall, dass das Sendesignal die zugewiesene Polarität aufweist, ein Referenzsignal erzeugt. Das Referenzsignal ist dabei insbesondere als zusätzliches Signal im Antwortsignal zu erkennen.

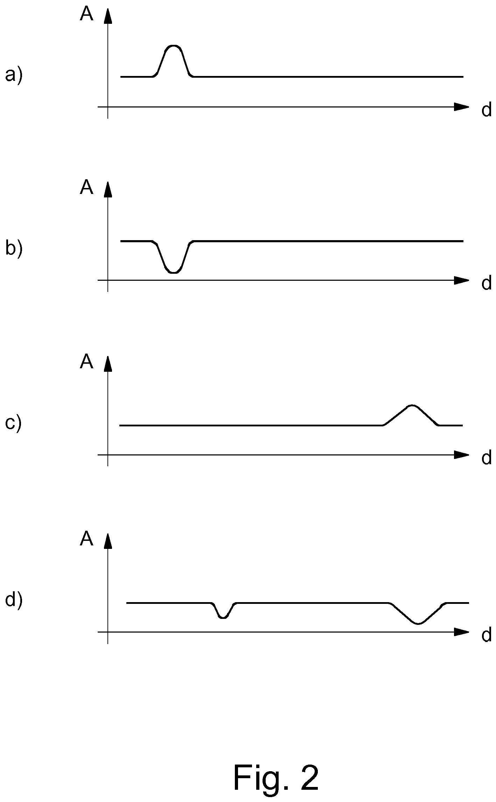

In der Fig. 2 sind vier beispielhafte und rein schematische Verläufe - a) bis d) - von Signalen dargestellt. Dabei handelt es sich um zwei Sendesignale (Signale a) und b)) und zwei Antwortsignale (Signale c) und d)), wobei die Sendesignale und die Antwortsignale jeweils zusammengehören (entsprechend Signale a) und d) bzw. Signale b) und c)). Aufgetragen ist jeweils die Amplitude A über dem Abstand d.

Die Sendesignale a) und b) haben jeweils unterschiedliche Polaritäten: einmal positiv und einmal negativ. Werden diese Sendesignale an der Oberfläche des Mediums reflektiert, so ergeben sich die Antwortsignale d) und c). An diesen ist zu erkennen, welche Polarität die Sendesignale aufweisen.

Weiterhin ist im Verlauf des Antwortsignals d) ein zusätzliches Signal zu erkennen, das von der Referenzvorrichtung erzeugt wird. Das Referenzsignal ergibt sich nur dann, wenn ein elektromagnetisches Signal, das sich entlang der Leitereinheit 1 ausbreitet, die passende Polarität aufweist. Daher ist es möglich, beispielsweise über die Vorgabe der Polarität des Sendesignals dieses Referenzsignal gezielt zu erzeugen. Das Referenzsignal hat den Vorteil, dass durch die bekannte Position der Referenzvorrichtung entlang der Leitereinheit 1 eine Kalibrierung der Antwortsignale möglich ist.

Ein Teil einer Referenzvorrichtung 7 zeigt die Fig. 3. Das Bauteil, das dafür verantwortlich ist, dass nur eine Polarität des Sendesignals zu dem Referenzsignal führt, ist hier eine Diode 8. Weiterhin ist zusätzlich noch ein temperaturabhängiges Widerstandselement 9 vorgesehen, das in Reihe mit der Diode 8 geschaltet ist und dafür sorgt, dass zusätzlich noch eine Aussage über die am Ort der Referenzvorrichtung 7 herrschende Temperatur möglich ist.

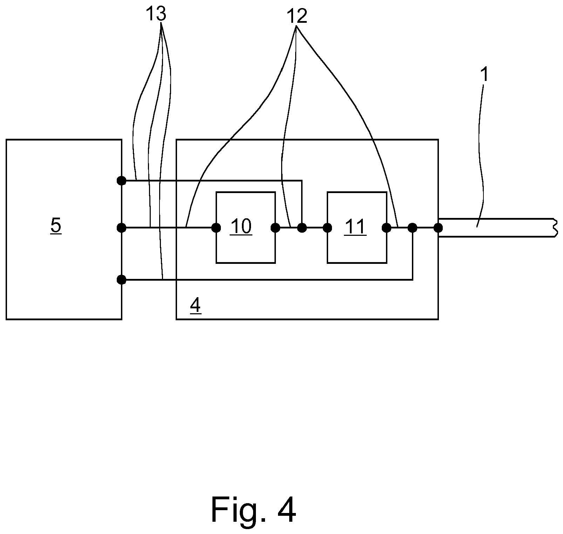

In der Fig. 4 ist eine schematische Darstellung eines Teils der Vorrichtung zur Füllstandsbestimmung dargestellt, wobei der Schwerpunkt auf der Elektronikvorrichtung 4 liegt. In dem Beispiel wird verdeutlicht, wie über die Polarität der Sendesignale eine Kontrolle der Bestandteile der Elektronikvorrichtung 4 erfolgt.

Beispielhaft verfügt die Elektronikvorrichtung 4 über eine erste Komponente 10 und eine zweite Komponente 11, die durch eine Verbindung 12 miteinander verbunden sind. Verbindungen 12 bestehen weiterhin zwischen den zwei Komponenten 10, 11 und der Auswertevorrichtung 5 bzw. der Leitereinheit 1.

Um die Signale zu, von und zwischen den zwei Komponenten 10, 11 auswerten zu können, sind jeweils Abgriffleitungen 13 zu der Auswertevorrichtung 5 vorgesehen.

Erzeugt die erste Komponente 10 ein Signal oder eine Information, die z. B. mit einer positiven Polarität des Sendesignals verbunden ist, und führt dies dazu, dass die zweite Komponente 11 ebenfalls ein Signal erzeugt, das mit der positiven Polarität assoziiert ist, so ist alles in Ordnung. Ergibt sich jedoch ein Wechsel der Polarität, so deutet dies auf einen Fehler hin.

Umgekehrt können hiermit beispielsweise Analog-Digital- oder Digital-Analog-Konverter überwacht werden. Eine Komponente 10, 11 ist beispielsweise ein Mikroprozessor, ein ASIC oder eine beliebige Steuereinheit, z. B. ein Human-Machine-Interface.

## Patentansprüche

1. Verfahren zur Füllstandsmessung nach dem Laufzeitverfahren,
wobei mindestens eine Leitereinheit (1) mit pulsartigen elektromagnetischen Sendesignalen beaufschlagt wird,
wobei von der Leitereinheit (1) elektromagnetische Antwortsignale abgegriffen werden,
wobei die Leitereinheit (1) entweder mit Sendesignalen mit positiver Polarität oder mit Sendesignalen mit negativer Polarität beaufschlagt wird und
wobei die Sendesignale mit einer vorgebbaren Abfolge in Bezug auf die Polarität erzeugt werden,
**dadurch gekennzeichnet,**
**dass** die Sendesignale jeweils mindestens einen Peak aufweisen und zu jedem Sendesignal das Vorzeichen des Peaks gewählt werden kann, sodass die Signale positive oder negative Amplitude aufweisen,
**dass** die Leitereinheit (1) mit mindestens einem ersten Sendesignal mit positiver Polarität oder negativer Polarität beaufschlagt wird,
**dass** daraufhin mindestens ein erstes Antwortsignal von der Leitereinheit (1) abgegriffen und abgespeichert wird,
**dass** die Leitereinheit (1) mit mindestens einem zweiten Sendesignal mit negativer Polarität oder positiver Polarität beaufschlagt wird,
**dass** daraufhin mindestens ein zweites Antwortsignal von der Leitereinheit (1) abgegriffen wird und
**dass** mindestens das erste Antwortsignal und das zweite Antwortsignal gemeinsam ausgewertet werden.

2. Verfahren nach Anspruch 1, **dadurch gekennzeichnet, dass** das erste Antwortsignal und das zweite Antwortsignal gemeinsam ausgewertet werden, indem sie voneinander subtrahiert werden.

3. Verfahren nach Anspruch 1 oder 2, **dadurch gekennzeichnet, dass** die Leitereinheit (1) mit mindestens einem Sendesignal beaufschlagt wird, dass von einer entlang der Leitereinheit (1) befindlichen Referenzvorrichtung (7) in Reaktion auf das Sendesignal mindestens ein Referenzsignal in dem Fall erzeugt wird, dass das Sendesignal eine der Referenzvorrichtung zugeordnete Polarität aufweist.

4. Verfahren nach Anspruch 3, **dadurch gekennzeichnet, dass** von der Referenzvorrichtung (7) das Referenzsignal so erzeugt wird, dass das Referenzsignal von mindestens einer weiteren Prozessgröße - vorzugsweise der Temperatur - abhängig ist.

5. Verfahren nach einem der Ansprüche 1 bis 4, **dadurch gekennzeichnet, dass** die Leitereinheit (1) von einer Elektronikvorrichtung (4) mit den Sendesignalen beaufschlagt wird, dass von der Elektronikvorrichtung (4) die Antwortsignale abgegriffen werden und dass mindestens ein Signal zwischen einer ersten Komponente (10) der Elektronikvorrichtung (4) und einer zweiten Komponente (11) der Elektronikvorrichtung (4) hinsichtlich der Polarität eines Sendesignals ausgewertet wird.

6. Vorrichtung zur Füllstandsmessung nach dem Laufzeitverfahren mit mindestens einer Leitereinheit (1), mit mindestens einer Elektronikvorrichtung (4) zum Beaufschlagen der Leitereinheit (1) mit pulsartigen elektromagnetischen Sendesignalen und zum Abgreifen von elektromagnetischen Antwortsignalen von der Leitereinheit (1) und mit mindestens einer Auswertevorrichtung (5) zum Auswerten der Antwortsignale,
wobei die Elektronikvorrichtung (4) die Leitereinheit (1) entweder mit Sendesignalen mit positiver Polarität oder mit Sendesignalen mit negativer Polarität beaufschlagt, und
wobei die Sendesignale mit einer vorgebbaren Abfolge in Bezug auf die Polarität erzeugt werden,
**dadurch gekennzeichnet,**
**dass** die Sendesignale jeweils mindestens einen Peak aufweisen und zu jedem Sendesignal das Vorzeichen des Peaks gewählt werden kann, sodass die Signale positive oder negative Amplitude aufweisen,
**dass** die Auswertevorrichtung (5) in einer Speichereinheit (6) mindestens ein nach einer Beaufschlagung der Leitereinheit (1) mit einem Sendesignal positiver Polarität oder negativer Polarität von der Leitereinheit (1) abgegriffenes erstes Antwortsignal abspeichert und
**dass** die Auswertevorrichtung (5) mindestens ein nach einer Beaufschlagung der Leitereinheit (1) mit einem Sendesignal negativer Polarität oder positiver Polarität von der Leitereinheit (1) abgegriffenes zweites Antwortsignal mit dem abgespeicherten ersten Antwortsignal auswertet.

7. Vorrichtung nach Anspruch 6, **dadurch gekennzeichnet, dass** die Auswertevorrichtung (5) das erste Antwortsignal und das zweite Antwortsignal voneinander subtrahiert.

8. Vorrichtung nach Anspruch 6 oder 7, **dadurch gekennzeichnet, dass** entlang der Leitereinheit (1) mindestens eine Referenzvorrichtung (7) angeordnet ist, wobei der Referenzvorrichtung (7) genau eine Polarität zugeordnet ist und wobei die Referenzvorrichtung (7) nur dann ein Referenzsignal erzeugt, wenn ein sich entlang der Leitereinheit (1) ausbreitendes elektromagnetisches Signal die zugeordnete Polarität aufweist.

9. Vorrichtung nach Anspruch 8, **dadurch gekennzeichnet, dass** die Referenzvorrichtung (7) mindestens eine Diode (8) und/oder ein temperaturabhängiges Widerstandselement (9) aufweist.

10. Vorrichtung nach einem der Ansprüche 6 bis 9, **dadurch gekennzeichnet, dass** die Elektronikvorrichtung (4) mindestens eine erste Komponente (10) und eine zweite Komponente (11) aufweist und dass die Auswertevorrichtung (5) mindestens ein Signal zwischen der ersten Komponente (10) und der zweiten Komponente (11) hinsichtlich der Polarität eines Sendesignals auswertet.

## Claims

1. Method for fill level measurement according to the transit time method,
wherein at least one conductor unit (1) is impinged with pulse-like electromagnetic transmit signals,
wherein electromagnetic response signals are tapped from the conductor unit (1),
wherein the conductor unit (1) is impinged either with transmit signals having positive polarity or with transmit signals having negative polarity, and wherein the transmit signals are generated with a predeterminable sequence with respect to the polarity,
**characterized in**
**that** the transmit signals each have at least one peak and the sign of the peak can be selected for each transmit signal so that the signals have positive or negative amplitude,
**that** the conductor unit (1) is impinged with at least one first transmit signal having positive polarity or negative polarity,
**that** at least one first response signal is then tapped from the conductor unit (1) and stored,
**that** the conductor unit (1) is impinged with at least one second transmit signal having negative polarity or positive polarity,
**that** at least one second response signal is then tapped from the conductor unit (1) and
**that** at least the first response signal and the second response signal are evaluated together.

2. Method according to claim 1, **characterized in that** the first response signal and the second response signal are evaluated together especially by subtracting them from one another.

3. Method according to claim 1 or 2, **characterized in that** the conductor unit (1) is impinged with at least one transmit signal, that at least one reference signal is generated by a reference device (7) located along the conductor unit (1) in response to the transmit signal in the event that the transmit signal has a polarity assigned to the reference device.

4. Method according to claim 3, **characterized in that** the reference signal is generated by the reference device (7) in such a manner that the reference signal is dependent on at least one further process variable - preferably the temperature.

5. Method according to any one of claims 1 to 4, **characterized in that** the conductor unit (1) is impinged with the transmit signals by an electronic device (4), that the response signals are tapped by the electronic device (4) and that at least one signal between a first component (10) of the electronic device (4) and a second component (11) of the electronic device (4) is evaluated with respect to the polarity of a transmit signal.

6. Device for fill level measurement according to the transit time method, having at least one conductor unit (1), having at least one electronic device (4) for impinging the conductor unit (1) with pulse-like electromagnetic transmit signals and for tapping electromagnetic response signals from the conductor unit (1), and having at least one evaluation unit (5) for evaluating the response signals,
wherein the electronic device (4) impinges the conductor unit (1) with either transmit signals having positive polarity or transmit signals having negative polarity, and
wherein the transmit signals are generated with a predeterminable sequence with respect to the polarity,
**characterized in**
**that** the transmit signals each have at least one peak and the sign of the peak can be selected for each transmit signal so that the signals have positive or negative amplitude,
**that** the evaluation unit (5) stores, in a memory unit (6), at least one first response signal tapped from the conductor unit (1) after the conductor unit (1) is impinged with a transmit signal of positive polarity or negative polarity, and
**that** the evaluation unit (5) evaluates at least one second response signal tapped from the conductor unit (1) with the stored first response signal after the conductor unit (1) is impinged with a transmit signal of negative polarity or positive polarity.

7. Device according to claim 6, **characterized in that** the evaluation unit (5) subtracts the first response signal and the second response signal from one another.

8. Device according to claim 6 or 7, **characterized in that** at least one reference device (7) is arranged along the conductor unit (1), wherein exactly one polarity is assigned to the reference device (7) and wherein the reference device (7) generates a reference signal only if an electromagnetic signal propagating along the conductor unit (1) has the assigned polarity.

9. Device according to claim 8, **characterized in that** the reference device (7) has at least one diode (8) and/or a temperature-dependent resistance element (9).

10. Device according to any one of claims 6 to 9, **characterized in that** the electronic device (4) has at least a first component (10) and a second component (11), and that the evaluation unit (5) evaluates at least one signal between the first component (10) and the second component (11) with respect to the polarity of a transmit signal.

## Revendications

1. Procédé de mesure d'un niveau de remplissage sur la base d'un temps de parcours, dans lequel
des signaux électromagnétiques pulsés d'émission sont appliqués sur au moins une unité conductrice (1),
des signaux électromagnétiques de réponse sont extraits de l'unité conductrice (1),
les signaux appliqués sur l'unité conductrice (1) étant des signaux d'émission de polarité positive ou des signaux d'émission de polarité négative,
les signaux d'émission étant formés dans une succession prédéterminable en termes de polarité, **caractérisé en ce que**
chacun des signaux d'émission présente au moins un pic et le signe du pic de chaque signal d'émission peut être sélectionné de telle sorte que les signaux présentent une amplitude positive ou une amplitude négative,
**en ce qu'**au moins un premier signal d'émission de polarité positive ou de polarité négative est appliqué sur l'unité conductrice (1),
**en ce qu'**ensuite, au moins un premier signal de réponse est extrait de l'unité conductrice (1) et conservé en mémoire,
**en ce qu'**au moins un deuxième signal d'émission de polarité négative ou de polarité positive est appliqué sur l'unité conductrice (1),
**en ce qu'**ensuite, au moins un deuxième signal de réponse est extrait de l'unité conductrice (1) et conservé en mémoire et
**en ce qu'**au moins le premier signal de réponse et le deuxième signal de réponse sont évalués ensemble.

2. Procédé selon la revendication 1, **caractérisé en ce que** le premier signal de réponse et le deuxième signal de réponse sont évalués ensemble en soustrayant l'un de l'autre.

3. Procédé selon les revendications 1 ou 2, **caractérisé en ce que** au moins un signal d'émission est appliqué sur l'unité conductrice (1), **en ce qu'**en réaction au signal d'émission, au moins un signal de référence est formé par un ensemble de référence (7) disposé le long de l'unité conductrice (1) au cas où le signal d'émission présente une polarité associée à l'ensemble de référence.

4. Procédé selon la revendication 1, **caractérisé en ce que** le signal de réponse est formé par l'ensemble de référence (7) de telle sorte que le signal de réponse dépende d'au moins une autre grandeur de processus, par exemple la température.

5. Procédé selon l'une des revendications 1 à 4, **caractérisé en ce que en ce que** les signal d'émission sont appliqués sur l'unité conductrice (1) par un ensemble électronique (4), **en ce que** les signal de réponse sont extraits par l'ensemble électronique (4) et **en ce que** la polarité d'au moins un signal d'émission est évaluée entre un premier composant (10) de l'ensemble électronique (4) et un deuxième composant (11) de l'ensemble électronique (4).

6. Ensemble de mesure d'un niveau de remplissage sur la base d'un temps de parcours, présentant
au moins une unité conductrice (1),
au moins un ensemble électronique (4) qui applique des signaux électromagnétiques pulsés d'émission sur l'unité conductrice (1), qui extrait des signaux électromagnétiques de réponse et
au moins un ensemble d'évaluation (5) qui évalue les signaux de réponse,
l'ensemble électronique (4) appliquant sur l'unité conductrice (1) des signaux d'émission de polarité positive ou des signaux d'émission de polarité négative,
les signaux d'émission étant formés dans une succession prédéterminable en termes de polarité, **caractérisé en ce que**
chacun des signaux d'émission présente au moins un pic et le signe du pic de chaque signal d'émission peut être sélectionné de telle sorte que les signaux présentent une amplitude positive ou une amplitude négative,
**en ce que** l'ensemble d'évaluation (5) conserve dans une unité de mémoire (6) au moins un premier signal de réponse extrait de l'unité conductrice (1) après qu'un signal d'émission de polarité positive ou de polarité négative a été appliqué sur l'unité conductrice (1) et
**en ce que** l'ensemble d'évaluation (5) évalue avec le premier signal de réponse au moins un deuxième signal de réponse extrait de l'unité conductrice (1) après qu'un signal d'émission de polarité négative ou de polarité positive a été appliqué sur l'unité conductrice (1).

7. Ensemble selon la revendication 6, **caractérisé en ce que** l'ensemble d'évaluation (5) soustrait l'un de l'autre le premier signal de réponse et le deuxième signal de réponse.

8. Ensemble selon les revendications 6 ou 7, **caractérisé en ce que** au moins un ensemble de référence (7) est disposé le long de l'unité conductrice (1), une seule polarité étant associée à l'ensemble de référence (7) et **en ce que** l'ensemble de référence (7) ne forme un signal de réponse que si un signal électromagnétique de la polarité associée se propage le long de l'unité conductrice (1).

9. Ensemble selon la revendication 8, **caractérisé en ce que** l'ensemble de référence (7) présente au moins une diode (8) et/ou un élément de résistance (9) dépendant de la température.

10. Ensemble selon l'une des revendications 6 à 9, **caractérisé en ce que** l'ensemble électronique (4) présente un premier composant (10) et un deuxième composant (11) et **en ce que** l'ensemble d'évaluation (5) évalue la polarité d'au moins un signal d'émission entre un premier composant (10) de l'ensemble électronique (4) et un deuxième composant (11) de l'ensemble électronique (4).
